# EUROPEAN PATENT APPLICATION

(11) **EP 3 815 550 A1**
(43) Date of publication of application: **05.05.2021**
(21) Application number: 18932659.8
(22) Date of filing: 06.09.2018
(51) Int. Cl.: A24B 3/14

(54) **EXTRUDER CONTROL METHOD AND METHOD FOR PRODUCING FLAVOR SOURCE USING SAME, AND EXTRUDER AND EXTRUSION MOLDING SYSTEM USING SAME**

(71) Applicant: Japan Tobacco Inc., Tokyo 105-6927 (JP)
(72) Inventor: SENDA, Kotaro, Tokyo 130-8603 (JP); IZUMIYA, Takafumi, Tokyo 130-8603 (JP); YAMASAKI, Ryosuke, Tokyo 130-8603 (JP)
(74) Representative: Hoffmann Eitle
(86) International application number: PCT/JP2018/033060
(87) International publication number: WO 2020/049691

(57) **Abstract**

A method for controlling an extruder 6 for kneading and extruding a powdery raw material fed into a casing 20 by rotating a screw 22 to form a kneaded product that is a source of granules, wherein the control method includes a load measurement step that measures the thrust load of the rotating screw 22 and a feed control step that controls the feed of the raw material into the casing 20 based on the thrust load measured in the load measurement step.

## Description

### Technical Field

The present invention relates to an extruder control method and a method for producing a flavor source using the same, and an extruder and an extrusion molding system using the same.

### Background Art

Patent Literature (PTL) 1 discloses a rubber-member producing device including a rubber extruder having an insertion opening into which a rubber material is to be inserted, an extrusion opening from which the rubber material is to be extruded, and a rubber-material flow path by which the insertion opening and the extrusion opening communicate with each other. The producing device includes a pressure sensor that measures the pressure of a material in the flow path and a controlling device that controls an insertion amount of a material that is inserted from the insertion opening based on the pressure of the material that has been measured by the pressure sensor.

The controlling device controls the insertion amount of the material to suppress variations in the pressure of the material in the extruder in a process of successively extruding the material in the extruder. Therefore, it is regarded as being possible to suppress variations in an extrusion flow rate of the material that is extruded from the extrusion opening and to produce members having good forming precision (precision in sectional shape).

Specifically, a screw that pushes the material to the extrusion opening while kneading the material is disposed in a casing of the extruder, and the pressure sensor is disposed on a downstream side with respect to the screw in the flow path, desirably, at a location between the screw in the flow path and the extrusion opening. Therefore, since the pressure sensor is capable of precisely measuring the pressure of the material just before the material is extruded from the extrusion opening when the influence on the forming precision is large, that is, is capable of precisely measuring the extrusion pressure of a kneaded product, the forming precision of the kneaded product (formed product) is regarded as being improved.

### Citation List

### Patent Literature

PTL 1: Japanese Unexamined Patent Application Publication No. 2016-2712

### Summary of Invention

### Technical Problem

In the extruder, when a powdery raw material fed into the casing is kneaded and extruded by rotating the screw to form a kneaded product that is a source of granules, factors other than the sectional shape of the kneaded product that is extruded from the extrusion opening may be important. For example, when forming the granules from the raw material as a flavor source for a flavor inhaler, it is necessary to reduce variations in a smoke taste of the flavor source when a user has inhaled the flavor source.

Therefore, in accordance with the physical properties of the raw material that is used, it is important to reduce variations in the degree of kneading of the raw material, in the moisture content of the kneaded product that is extruded from the extruder before forming the granules, and in the extrusion flow rate of the kneaded product that is extruded from the extruder. This is because, for example, physical properties, such as the density and the moisture content of the granules, and thus the quality of the granules need to be uniform, the physical properties and the quality of the granules influencing the smoke taste when the granules obtained as a result of subjecting the kneaded product to, for example, size regulation and drying are permeated with air.

However, as in PTL 1, in the case in which the feed of the raw material into the casing of the extruder is controlled based on the extrusion pressure measured at the extrusion opening, when, for example, the raw material is fed by batch processing and the feed of the raw material is reduced at a final stage of the batch processing, the casing is sometimes not sufficiently filled with the raw material.

Even if a filling rate of the raw material in the casing is low, the raw material is pushed toward the side of the extrusion opening by the screw in the casing and the extrusion pressure of the extrusion opening may be locally increased. In the case of PTL 1, since the extrusion pressure is high even though the filling rate of the raw material in the casing is low, it is determined that the casing is sufficiently filled with the raw material, as a result of which the feed of the raw material remains low. Therefore, compared with an initial stage of the batch processing, in the final stage of the batch processing, the degree of kneading of the raw material at a kneading section in the casing is reduced and the extrusion flow rate and the moisture content of the kneaded product that is extruded from the extrusion opening are reduced, and thus the density of the granules that are finally formed is reduced.

When the filling rate of the raw material in the casing is low, it takes time to apply to the kneaded product a sufficient extrusion pressure that allows the kneaded product to be extruded from the extrusion opening. Therefore, the time taken to extrude from the extrusion opening the raw material that has been fed into the casing is increased, in other words, a retention time of the raw material in the casing is increased. When the retention time of the raw material in the casing is increased, the raw material tends to absorb friction heat existing between an inner wall of the casing and an outer surface of the screw.

Though depending upon the physical properties of the raw material, when the retention time is increased, the raw material may tend to absorb reaction heat produced by kneading. As a result, the raw material at the final stage of the batch processing is such that, at the kneading section in the casing, retained moisture is easily volatilized, and the moisture content of the kneaded product that is extruded from the extrusion opening and thus the moisture content of the finally formed granules are reduced.

A reduction in the extrusion flow rate and a reduction in the moisture content of the kneaded product as those described above lead to variations in the physical properties and thus in the quality of the granules, and when the granules are used as the aforementioned flavor source, these reductions greatly affect the smoke taste.

The present invention has been made in view of such problems, and an object of the present invention is to provide an extruder control method and a method for producing a flavor source using the same, and an extruder and an extrusion molding system using the same, which are capable of making uniform the physical properties and thus the quality of formed granules. Solution to Problem

To this end, a method for controlling an extruder of the present invention is a method for controlling an extruder for kneading and extruding a powdery raw material fed into a casing by rotating a screw to form a kneaded product that is a source of granules. The method includes a load measurement step that measures a thrust load of the screw that is rotating and a feed control step that controls a feed of the raw material into the casing based on the thrust load measured in the load measurement step.

On the other hand, a method for producing a flavor source of the present invention forms the granules as the flavor source for a flavor inhaler from the raw material by using the aforementioned method for controlling the extruder.

On the other hand, an extruder of the present invention is an extruder that is used in an extrusion molding system including a hopper into which a powdery raw material is to be inserted and a predetermined quantity feeder that includes a table to which the raw material stored in the hopper is to be fed as a result of the raw material falling onto the table due to a weight of the raw material, a blade that rotates at the table, and a rotating shaft that rotates the blade, the predetermined quantity feeder feeding the raw material of a feed that is in accordance with a rotating speed of the rotating shaft The extruder includes a casing to which the raw material is to be fed from the predetermined quantity feeder, a screw that is accommodated in the casing and that rotates to knead and extrude the raw material fed into the casing to thereby form a kneaded product that is a source of granules, a load measuring device that measures a thrust load of the screw that is rotating, and a control unit that controls the feed of the raw material into the casing by controlling the rotating speed of the rotating shaft based on the thrust load measured by the load measuring device.

On the other hand, an extrusion molding system of the present invention includes a hopper into which a powdery raw material is to be inserted; a predetermined quantity feeder that includes a table to which the raw material stored in the hopper is to be fed as a result of the raw material falling onto the table due to a weight of the raw material, a blade that rotates at the table, and a rotating shaft that rotates the blade, the predetermined quantity feeder feeding the raw material of a feed that is in accordance with a rotating speed of the rotating shaft; and the aforementioned extruder.

### Advantageous Effects of Invention

The extruder control method and the method for producing a flavor source using the same, and the extruder and the extrusion molding system using the same are capable of making uniform the physical properties and thus the quality of the formed granules.

### Brief Description of Drawings

[Fig. 1] Fig. 1 is a flowchart of a process of producing granules that are formed by an extruder according to one embodiment of the present invention.
[Fig. 2] Fig. 2 illustrates a structure of an extrusion molding system including the extruder according to one embodiment of the present invention.
[Fig. 3] Fig. 3 illustrates the structure as viewed from above the extruder in Fig. 2.
[Fig. 4] Fig. 4 is a flowchart of extrusion molding control that is performed by a control unit in Fig. 3.
[Fig. 5] Fig. 5 is a time chart of operations of a feed control step in Fig. 4 on a time series basis.
[Fig. 6] Fig. 6 is a graph showing a relationship between a layer height of a raw material stored in a hopper and a powder bottom pressure.
[Fig. 7] Fig. 7 is a graph showing a relationship between a thrust load of an interlocking screw, an extrusion flow rate of a kneaded product, and a moisture content of the kneaded product.
[Fig. 8] Fig. 8 is a graph showing a comparison between a case in which the extrusion molding control was performed on a time-series change in the moisture content of the kneaded product and a case in which such extrusion molding control was not performed.
[Fig. 9] Fig. 9 is a graph showing a comparison between a case in which the extrusion molding control was performed on a time-series change in the extrusion flow rate of the kneaded product and a case in which such extrusion molding control was not performed.

### Description of Embodiments

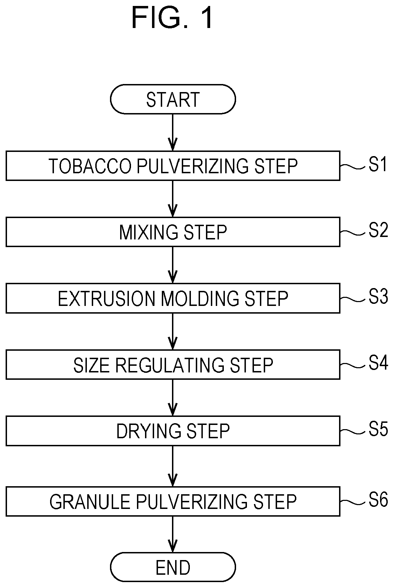

An extruder control method and a method for producing a flavor source using the same, and an extruder and an extrusion molding system using the same according to one embodiment of the present invention are described below based on the drawings. Fig. 1 is a flowchart of a process of producing granules that are formed by an extruder according to one embodiment of the present invention. By subjecting a powdery raw material to each step shown in Fig. 1, granules are formed, and the granules are included in, for example, a flavor source that is used in a non-combustion-type flavor inhaler serving as a smoking article.

The flavor source may include, in addition to granules formed from a tobacco raw material, shredded tobacco, plants and flavors other than tobacco, and a forming body obtained by forming a tobacco raw material into a sheet form. A user is capable of, by inhaling the flavor inhaler, taking in a component obtained when the flavor source is permeated with air, and tasting a smoke flavor. With reference to Fig. 1, an example of a process of producing granules when a primary raw material of the granules is a tobacco raw material is described below.

When the producing of the granules is started, first, in a tobacco pulverizing step of step S1, the tobacco raw material is pulverized to form a fine powder of tobacco. By forming the fine powder of tobacco, it becomes possible to perform an extrusion molding step described below.

Next, in a mixing step of step S2, a mixture in which a powdery or a liquid flavor is mixed with the fine powder of tobacco is formed.

Next, in the extrusion molding step of step S3, the mixture is fed as a powdery raw material to an extrusion molding system 1, and the mixture is kneaded and subjected to extrusion molding to form a filament-like kneaded product.

Next, in a size regulating step of step S4, the granules are formed by beating the filament-like kneaded product.

Next, in a drying step of step S5, by drying the granules under a reduced pressure, components having a bad effect on a smoke taste (components making taste and flavor worse) are removed from the granules while maintaining a flavor component of the granules.

Next, in a granule pulverizing step of step S6, the granules having a large grain size are pulverized and a very fine powder that has separated from the granules is removed. Thereafter, if necessary, for example, a flavor is added, and the process of producing the granules is ended.

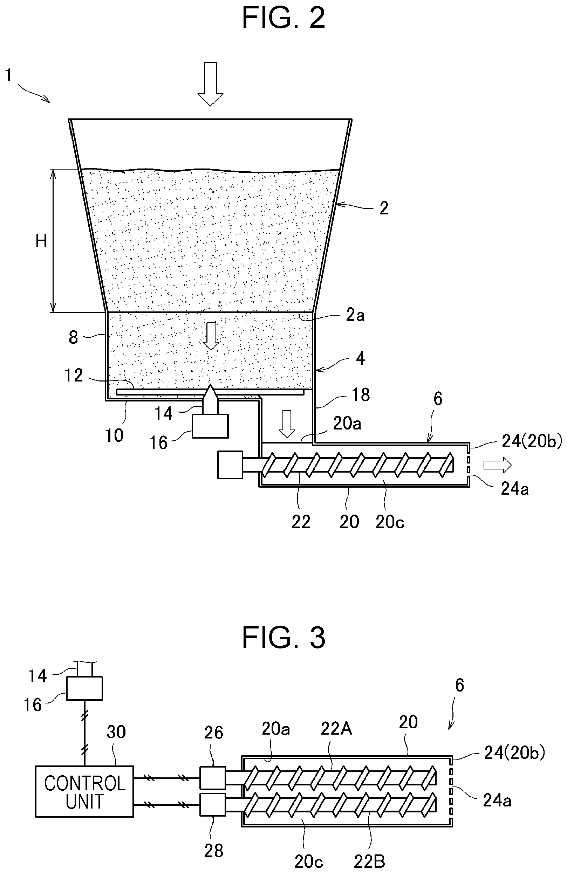

Fig. 2 illustrates a structure of the extrusion molding system 1 including the extruder according to one embodiment of the present invention. The extrusion molding system 1 is a batch processing facility for performing the extrusion molding step of step S3 shown in Fig. 1, and includes a hopper 2, a cycle feeder 4, and an extruder 6. Fig. 2 schematically and transparently shows the insides of the hopper 2, the cycle feeder 4, and the extruder 6. A predetermined amount, which corresponds to an amount for performing one batch processing operation, of raw material is inserted into the hopper 2, and the raw material is stored in the hopper 2 to a layer height H.

The cycle feeder 4 is provided below a discharge opening 2a of the hopper 2, and the raw material falls due to its own weight and is fed from the discharge opening 2a. The cycle feeder 4 is a rotating-type predetermined quantity feeder, and includes a cylindrical receiver 8 that has a bottom and that is positioned below the discharge opening 2a of the hopper 2, a table 10 that forms a bottom wall of the receiver 8, a blade 12 that stirs the raw material by rotating at the table 10, a rotating shaft 14 that is connected to the blade 12, a driving source 16, such as a motor, that rotationally drives the rotating shaft 14, and a cylindrical discharge section 18 that is connected to an opening edge formed on an outer peripheral side of the table 10.

The raw material that has fallen from the hopper 2 is fed onto the table 10 via the receiver 8, is cut by the blade 12 that is rotationally driven via the rotating shaft 14 by starting up the driving source 16, and is fed to the extruder 6 from the discharge section 18. It is possible to change the feed of the raw material into the extruder 6 from the cycle feeder 4 by controlling the rotating speed of the rotating shaft 14.

The extruder 6 is a kneading extruder, and includes a casing 20, a screw 22 that is accommodated in the casing 20, and a die 24 having a plurality of extrusion holes 24a.

A raw-material receiving opening 20a and a raw-material extrusion opening 20b are formed in the casing 20. The receiving opening 20a is positioned below the discharge section 18 of the cycle feeder 4. The extrusion opening 20b is formed in the die 24. A kneading section 20c is formed between the receiving opening 20a and the extrusion opening 20b in the casing 20. The kneading section 20c is a raw-material flow path, in which the raw material fed from the receiving opening 20a is pushed to the extrusion opening 20b while the raw material is kneaded by rotating the screw 22.

Fig. 3 illustrates the structure as viewed from above the extruder 6, and schematically and transparently shows the inside of the extruder 6. The extruder 6 of the embodiment is a biaxial-screw-type kneading extruder, and the screw 22 includes a driving screw 22A that is rotationally driven by a driving source 26, such as a motor, and an interlocking screw 22B that is not driven by, for example, the driving source 26. The interlocking screw 22B rotates in response to the rotation of the driving screw 22A in the same direction.

The driving source 26 is connected to a receiving-opening-20a side with respect to the driving screw 22A in an axial direction thereof. The extrusion opening 20b is positioned on an opposite side (one end side) with respect to the receiving opening 20a in the axial direction of the driving screw 22A. A powdery raw material that has been fed into the casing 20 via the receiving opening 20a from the discharge section 18 of the cycle feeder 4 is pushed while being kneaded at the kneading section 20c by rotating each of the screws 22A and 22B, and fills the inside of the casing 20. When the raw material reaches the extrusion opening 20b and is subjected to a pressing force, the raw material is extruded as a filament-like kneaded product from the die 24.

The extruder 6 of the embodiment also includes a load cell (load measuring device) 28 that measures a thrust load Ft of the interlocking screw 22B. The load cell 28 is disposed on the receiving-opening-20a side (the other end side) with respect to the screws 22A and 22B in the axial direction. That is, the load cell 28 measures the thrust load Ft of the interlocking screw 22B on the receiving-opening-20a side opposite to the extrusion opening 20b as viewed in the axial direction.

As shown in Fig. 3, the driving source 16 of the cycle feeder 4, the driving source 26 of the driving screw 22A, and the load cell 28 are electrically connected to a control unit 30. The control unit 30 receives a signal of the thrust load Ft of the interlocking screw 22B that has been measured by the load cell 28, and, based on the signal of the thrust load Ft, controls the rotating speed of the rotating shaft 14 and thus the rotating speed of the blade 12 via the driving source 16, and controls the feed of the raw material into the casing 20. This control is performed in a feed control step during extrusion molding control described below.

The control unit 30, by performing extrusion molding control whose primary step is the feed control step, stabilizes an extrusion flow rate of a kneaded product that is extruded from the extrusion opening 20b and a moisture content of the kneaded product that has been extruded, and thus makes uniform the physical properties (such as the density and a moisture content) of formed granules. Note that, in this control, in consideration of unintended considerable influences on the degree of kneading of the kneaded product that is extruded from the extrusion opening 20b and thus on the physical properties and the quality of the granules, the rotating speed of the driving screw 22A is kept constant. That is, in the embodiment, the control unit 30 starts up and stops the driving screw 22Abut does not control the rotating speed thereof.

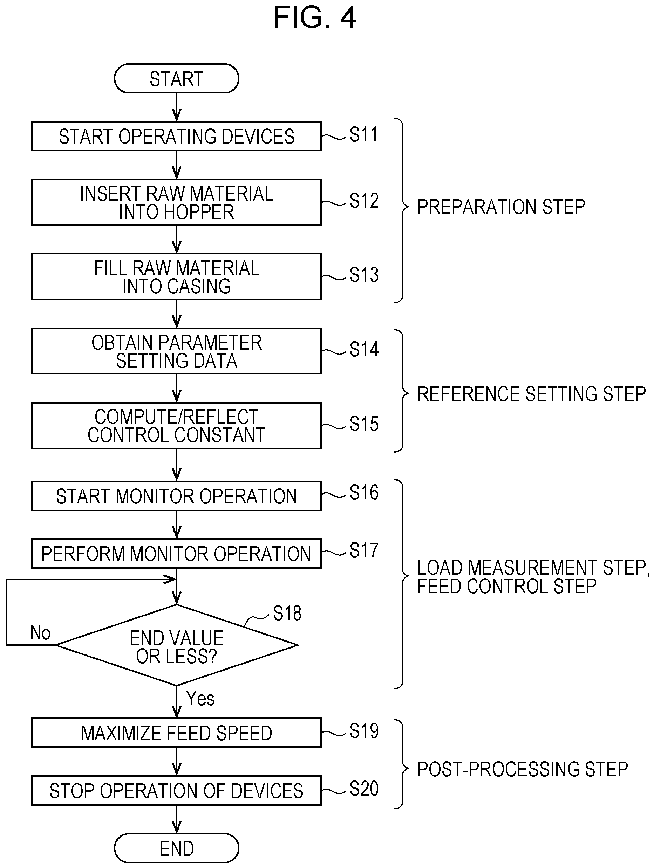

Fig. 4 is a flowchart of the extrusion molding control that is performed by the control unit 30. In performing this control, when batch processing is started, first, in step S11, the driving source 16 of the cycle feeder 4 and the driving source 26 of the driving screw 22A are started up to start the operation of the devices of the extrusion molding system 1.

Next, in step S12, the predetermined amount, which corresponds to an amount for performing one batch processing operation and at which a layer height becomes the layer height H, of raw material is inserted into the hopper 2.

Next, in step S13, the raw material is filled into the casing 20 via the cycle feeder 4 from the hopper 2. The raw material is filled into the casing 20 until the raw material reaches the extrusion opening 20b while being kneaded at the kneading section 20c, and the raw material is filled into the kneading section 20c with a predetermined filling rate (for example, 90% or greater).

Here, the filling rate can be calculated by defining as the volume of the kneading section 20c a volume obtained by subtracting the volume of each of the screws 20A and 20B from the volume of the casing 20. The filling rate may be regulated by replacing this filling rate by the filling amount of the raw material in the casing 20. Steps S11 to S13 above are performed as a preparation step in this control.

Next, in step S14, parameter setting data that is used in this control is obtained. The setting data includes, for example, an increase amount (ΔN+) and a decrease amount (ΔN-) of a rotating speed N of the blade 12 when performing the feed control step, an upper limit value (Ftu) and a lower limit value (Ftl) of the thrust load for defining a region (dead zone) in which the rotating speed N of the blade 12 is not controlled, a data obtainment time (t) of the thrust load Ft when performing a load measurement step described below, and an end value (Fte) of the thrust load Ft when ending the feed control step.

In the state of step S14, that is, before the feed control step and in the state after the filling of the raw material into the casing 20 while rotating each of the screws 22A and 22B has ended (after the preparation step), the load cell 28 preliminarily measures the thrust load Ft of the interlocking screw 22B. Then, based on the measured thrust load Ft, a reference range that defines the upper limit value (Ftu) and the lower limit value (Ftl) of the thrust load Ft is set.

Next, in step S15, by using the obtained parameter setting data and the set reference range of the thrust load Ft, a control constant according to this control is computed and an operation for reflecting the control constant in this control is performed. Steps S14 to S15 above are performed as a reference setting step in this control.

Next, in step S16, a monitor operation of the extrusion molding system 1 is started as a result of the load cell 28 starting to measure on-line the thrust load Ft.

Next, in step S17, the monitor operation of the extrusion molding system 1 is performed on-line.

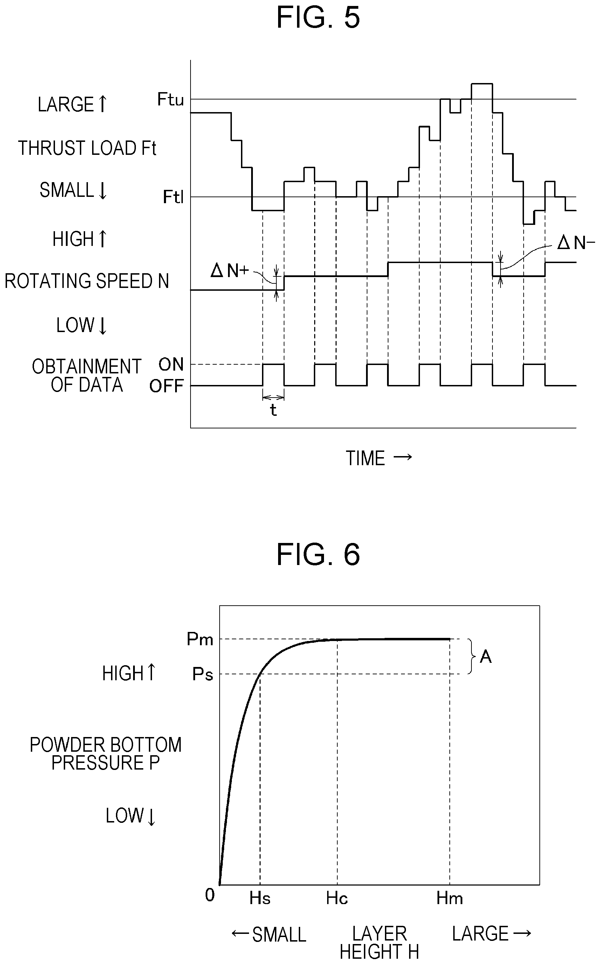

Fig. 5 is a time chart of operations of the feed control step on a time-series basis. Referring to Fig. 5, at a timing of the data obtainment time (t) when data obtainment is ON, data regarding the thrust load Ft measured by the load cell 28 is periodically monitored (the load measurement step). When the measured thrust load Ft becomes greater than the upper limit value (Ftu), the rotating speed N of the blade 12 is decreased by the decrease amount (ΔN-) to thereby decrease the feed of the raw material into the casing 20.

On the other hand, when the thrust load Ft measured at the timing of the data obtainment time (t) becomes less than the lower limit value (Ftl), the rotating speed N of the blade 12 is increased by the increase amount (ΔN+) to thereby increase the feed of the raw material into the casing 20 (the feed control step).

Next, in step S18, it is determined whether the thrust load Ft measured at the timing of the data obtainment time (t) is less than or equal to the end value (Fte).

If the determination result is Yes and the thrust load Ft is less than or equal to the end value (Fte), even if the aforementioned feed control step is performed, the feed of the raw material into the extruder 6 is still being reduced, as a result of which it is determined that one batch processing operation has ended, and the process proceeds to step S19. On the other hand, when the thrust load Ft is greater than the end value (Fte) of the thrust load Ft, the process returns to step S17 and the monitor operation of the extrusion molding system 1 is continued. Steps S16 to S18 above are performed as the load measurement step and the feed control step in this control.

In step S19, a command is given to the driving source 26 to increase the rotating speed, and the rotating speed N of the blade 12 is increased to a maximum value to thereby maximize the feed speed of the raw material into the extruder 6 from the cycle feeder 4 and to discharge the raw material remaining in the cycle feeder 4 and thus the hopper 2.

Next, in step S20, in order from a downstream side of the extrusion molding system 1, that is, the driving source 26 of the driving screw 22A and the driving source 16 of the cycle feeder 4 are stopped in this order, and the operations of the devices of the extrusion molding system 1 are stopped. Steps S19 to S20 above are performed as a post-processing step in this control, and this control and the batch processing is ended via the post-processing step.

Fig. 6 shows a relationship between the layer height H of the raw material stored in the hopper 2 and a powder bottom pressure P. The raw material existing near the discharge opening 2a of the hopper 2 shown in Fig. 2 is subjected to the powder bottom pressure P due to the weight of the stored raw material. Due to the action of the powder bottom pressure P, a constant volume of the raw material falls (is cut) due to its own weight into the cycle feeder 4 from the hopper 2.

When the raw material has been cut from a layer height Hm, at which the layer height H of the raw material stored in the hopper 2 is a maximum, the powder bottom pressure P is maintained at about a constant pressure Pm until a certain constant layer height Hc. However, when the raw material is cut at the layer height Hc or less and the amount of raw material stored in the hopper 2 is reduced, not only is the weight of the raw material reduced, but also friction force between an inner wall of the hopper 2 and the powder and friction force between portions of the powder is reduced. Therefore, a phenomenon in which the powder bottom pressure P is suddenly reduced occurs. This phenomenon is based on a so-called Janssen formula related to the powder bottom pressure P.

In the embodiment, as the batch processing nears a final stage, a reduction in the powder bottom pressure P causes the feed of the raw material into the cycle feeder 4 from the hopper 2 to be suddenly reduced. Therefore, hitherto, at the final stage of the batch processing, a filling ratio of the raw material in the casing 20 has been reduced, an extrusion pressure of a kneaded product from the extrusion opening 20b has been reduced, and thus the extrusion flow rate of the kneaded product from the extrusion opening 20b has been reduced.

On the other hand, even if the filling rate of the raw material in the casing 20 is reduced, the extrusion pressure of the extrusion opening 20b may be locally increased temporarily as a result of the raw material being pushed toward the side of the extrusion opening 20b in the kneading section 20c by rotating each of the screws 22A and 22B. However, the kneaded product is not subjected to a sufficient extrusion pressure that allows the kneaded product to be extruded from the extrusion holes 24a of the die 24. As a result, a retention time of the raw material in the casing 20 is increased.

When the retention time of the raw material in the casing 20 is increased, the raw material tends to absorb friction heat existing between the inner wall of the casing 20 and an outer surface of each of the screws 22A and 22B. Though depending upon the physical properties of the raw material, when the retention time is increased, the raw material may tend to absorb reaction heat produced by kneading.

As a result, the raw material at the final stage of the batch processing is such that, at the kneading section 20c in the casing 20, retained moisture tends to be volatilized, and the moisture content of the kneaded product that is extruded from the extrusion opening 20b and thus the moisture content of finally formed granules are reduced. A reduction in the extrusion flow rate and a reduction in the moisture content of the kneaded product as those described above lead to variations in the physical properties and thus in the quality of the granules, and when the granules are used as a flavor source, these reductions considerably affect the smoke taste.

As a method that solves such problems, the following method may be considered. In the method, in order to make constant the filling rate of the raw material in the casing 20, a predetermined quantity of raw material is fed to the cycle feeder 4 and thus to the extruder 6 by using, for example, a feed of the raw material converted based on a reduction in the mass of the raw material stored in the hopper 2. However, since this method is not capable of performing control in which variations in the production year of the raw material and variations in the bulk density caused by seasonal variations in the raw material are considered, it is difficult to control the filling rate of the raw material in the casing 20 at a constant filling rate.

Control of the feed of the raw material into the extruder 6 based on the extrusion pressure of the kneaded product in the extrusion opening 20b may be considered. However, as described in the technical problem in the description, even if the filling rate of the raw material in the casing 20 is low, the raw material is pushed toward the side of the extrusion opening 20b by each of the screws 22A and 22B in the casing 20, and the extrusion pressure of the extrusion opening 20b may be locally increased. Therefore, even in this casing, it is difficult to control the filling rate of the raw material in the casing 20 at a constant value.

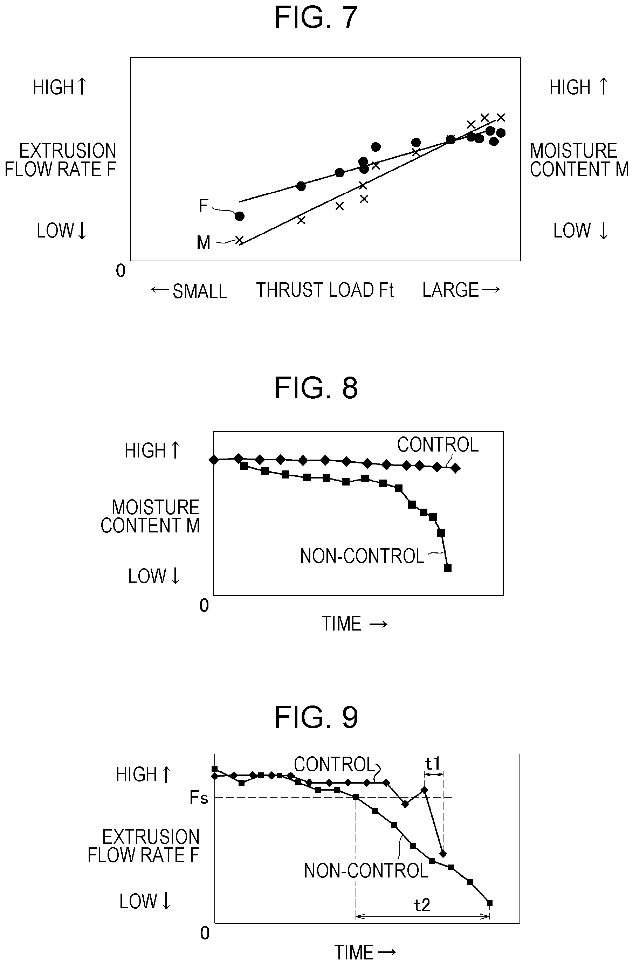

Fig. 7 is a graph showing a relationship between the thrust load Ft of the interlocking screw 22B, an extrusion flow rate F of a kneaded product, and a moisture content M of the kneaded product. As is clear from Fig. 7, when, in the extrusion molding step, the kneaded product is extruded from the extrusion opening 20b of the extruder 6, the extrusion flow rate F and the moisture content M follow and vary due to variations in the thrust load Ft.

Specifically, it is determined that least-square contribution ratios of the variations in the extrusion flow rate F and the moisture content M with respect to the variations in the thrust load Ft may each be greater than 0.9, and that a correlation of the thrust load Ft with respect to the extrusion flow rate F and the moisture content M is an approximately linear proportional relationship.

Unlike when the extrusion pressure of the extrusion opening 20b is measured, the thrust load Ft is not easily influenced by local variations in the extrusion pressure. Therefore, compared with when control for keeping constant the extrusion pressure of the extrusion opening 20b is merely performed, it is possible to reliably stabilize the degree of kneading of the raw material, the moisture content M, and the extrusion flow rate F. Since, for example, the driving source 26 is not connected to the interlocking screw 22B, compared with at least the driving screw 22A, the interlocking screw 22B is rotated with a load in the axial direction being small, and the thrust load Ft can be measured with high precision.

The thrust load Ft of the interlocking screw 22B can be handled as a resultant force of forces to which a spiral ridge portion and root portion of the interlocking screw 22B are subjected over an entire region of the kneading section 20c in the axial direction while the raw material is being kneaded. Therefore, by, in the extrusion molding control, controlling the feed of the raw material into the extruder 6 based on the thrust load Ft of the interlocking screw 22B that is not easily influenced by local variations in the extrusion pressure, it is possible to more precisely stabilize the degree of kneading of the raw material and the extrusion pressure and thus the moisture content M and the extrusion flow rate F of the kneaded product while maintaining at a constant value the filling rate of the raw material in the casing 20.

As described above, the reference range of the thrust load Ft is set in the reference setting step before the feed control step and after filling the raw material into the casing in the preparation step, in other words, when the powder bottom pressure P is in a relatively stable state from an initial stage to a middle stage of the batch processing. This corresponds to a region (stable region A) in which the powder bottom pressure P is relatively stable from the powder bottom pressure Pm corresponding to the layer height Hm shown in Fig. 6 to a powder bottom pressure Ps corresponding to a layer height Hs (for example, Ps/Pm = 0.77), and the reference setting step is performed in this stable region A.

For example, in the reference setting step, a measurement value of the thrust load Ft is sampled at a one-second cycle, a maximum value and a minimum value in a data group constituted by the average of the pieces of data for 60 samplings are defined as a range of the stable region A of the powder bottom pressure P of batch processing thereof, and the upper limit value (Ftu) and the lower limit value (Ftl) of the reference range are defined. Therefore, since it is possible to set the reference range on-line for each batch processing operation for a different raw material, it is possible to control the thrust load Ft while eliminating influences caused by changes and variations in the physical properties of the raw materials for the batch processing operations, and to control the thrust load Ft in a regulation width that does not hinder the control. Therefore, it is possible to more reliably stabilize the degree of kneading of the raw material in the extruder 6 and thus to more reliably stabilize the extrusion flow rate F and the moisture content M of the kneaded product.

Fig. 8 is a graph showing a comparison between a case in which the extrusion molding control was performed on a time-series change in the moisture content M of a kneaded product (control) and a case in which such extrusion molding control was not performed (non-control). The moisture content M of the kneaded product extruded from the extrusion opening 20b was measured with an on-line infrared moisture meter at a predetermined cycle from the start of the batch processing to the end of the batch processing.

At this time, when this control was performed, a standard deviation of the moisture content M was 0.08% and a variation coefficient was 0.29, whereas when this control was not performed, the standard deviation of the moisture content M was 0.29% and the variation coefficient was 2.29%. By performing the extrusion molding control of the embodiment, the moisture content M of the kneaded product was maintained at a constant value to the extent possible until the batch processing ended, and variations in the moisture content M was greatly reduced in terms of the batch processing as a whole.

Fig. 9 is a graph showing a comparison between a case in which the extrusion molding control was performed on a time-series change in the extrusion flow rate F of a kneaded product (control) and a case in which such extrusion molding control was not performed (non-control). The weight of granules formed after the extrusion of the kneaded product from the extrusion opening 20b was measured at a predetermined cycle from the start of the batch processing to the end of the batch processing, and the unit of the weight was converted to measure the extrusion flow rate F. Times at which the extrusion flow rate F of the kneaded product was reduced to less than a set flow rate Fs at the final stage of the batch processing were defined as times t1 and t2 of subsequent reductions in the extrusion flow rate F.

At this time, when this control was performed, the time t1 of the subsequent reduction in the extrusion flow rate F was approximately 5 minutes, whereas when this control was not performed, the time t2 of the subsequent reduction in the extrusion flow rate F was approximately 30 minutes. By performing the extrusion molding control of the embodiment, the extrusion flow rate F of the kneaded product was maintained at a constant value to the extent possible until the batch processing ended, and variations in the extrusion flow rate F was greatly reduced in terms of the batch processing as a whole.

As described above, the method for controlling the extruder 6 and the method for producing a flavor source using the same, and the extruder 6 and the extrusion molding system 1 using the same are capable of reducing variations in the degree of kneading of a raw material and variations in the water content and the extrusion flow rate of a kneaded product, and making uniform the physical properties and thus the quality of granules formed from the kneaded product.

Specifically, in the extrusion molding control, the load measurement step that measures the thrust load Ft of the interlocking screw 22B that is rotating and the feed control step that controls the feed of the raw material into the casing 20 based on the thrust load Ft measured in the load measurement step are performed. Therefore, it is possible to prevent a sudden reduction in the feed of the raw material into the cycle feeder 4 from the hopper 2 caused by a reduction in the powder bottom pressure P as the batch processing nears the final stage, and to maintain at a constant value to the extent possible the filling rate of the raw material in the casing 20.

Consequently, a reduction in the extrusion flow rate of the kneaded product and a reduction in the moisture content of the kneaded product at the final stage of the batch processing are suppressed. Thus, it is possible to suppress variations in the physical properties and the quality of the granules and to make uniform the smoke taste when the granules are used as a flavor source. Actually, as shown in Figs. 8 and 9, it is possible to greatly reduce variations in the moisture content M and the extrusion flow rate F of the kneaded product in terms of the batch processing as a whole.

More specifically, in the feed control step, based on the reference range that defines the upper limit value (Ftu) and the lower limit value (Ftl) of the measured thrust load Ft, when the thrust load ft is greater than the upper limit value (Ftu), the feed of the raw material is reduced, whereas when the thrust load Ft is less than the lower limit value (Ftl), control that increases the feed of the raw material is performed.

In the reference setting step, before the feed control step and after the preparation step, in other words, when the powder bottom pressure P of the raw material stored in the hopper is in the stable region A, the reference range of the thrust load Ft is set. This makes it possible to set the reference range on-line for each batch processing operation for a different raw material, as a result of which it is possible to control the thrust load Ft while eliminating influences caused by changes and variations in the physical properties of the raw materials for the batch processing operations, and to control the thrust load Ft in a regulation width that does not hinder the control. Therefore, it is possible to more reliably stabilize the degree of kneading of the raw material in the extruder 6 and thus to more reliably stabilize the extrusion flow rate F and the moisture content M of the kneaded product.

In particular, in the embodiment, in the load measurement step and the reference setting step, the thrust load of the interlocking screw is measured. Therefore, since the driving source 26 is not connected to the interlocking screw 22B, compared with at least the driving screw 22A, the interlocking screw 22B is rotated with a load in the axial direction being small. Therefore, it is possible to measure the thrust load Ft with high precision. The thrust load Ft of the interlocking screw 22B can be handled as a resultant force of forces to which a spiral ridge portion and root portion of the interlocking screw 22B are subjected over the entire region of the kneading section 20c in the axial direction while the raw material is being kneaded.

Therefore, by, in the extrusion molding control, controlling the feed of the raw material into the extruder 6 based on the thrust load Ft of the interlocking screw 22B, it is possible to more precisely stabilize the degree of kneading of the raw material and the extrusion pressure and thus the moisture content and the extrusion flow rate of the kneaded product while maintaining at a constant value the filling rate of the raw material in the casing 20.

The load cell 28 is disposed on the receiving-opening-20a side with respect to the screws 22A and 22B in the axial direction. That is, in the load measurement step and the reference setting step, the thrust load Ft of the interlocking screw 22B is measured on a side opposite to the extrusion opening 20b in the axial direction. Therefore, when measuring the thrust load Ft of the interlocking screw 22B, it is possible to more precisely measure the thrust load Ft of the interlocking screw 22B while eliminating the influences of the extrusion pressure that acts on the kneaded product when extruding the kneaded product from the extrusion opening 20b.

Although the description of the embodiment of the present invention will be ended, the present invention is not limited thereto. Various changes can be made within a range that does not depart from the spirit of the present invention.

For example, as long as the extruder 6 is capable of measuring the thrust load Ft on a side opposite to the extrusion opening 20b by using the load cell 28, the number of axes of the screw 22 can be changed to 1 or 3 or more. Therefore, the extruder 6 is not limited to a biaxial-screw-type extruder. As long as the measurement precision is not adversely affected, it is possible to measure the thrust load Ft of the driving screw 22A.

Although the control unit 30 starts up and stops the driving screw 22A, the control unit 30 does not control the rotating speed thereof. Therefore, it is possible to prevent the extrusion molding control from becoming complicated. However, it is not limited thereto, and as long as there are no unintended considerable influences on the degree of kneading of the kneaded product that is extruded from the extrusion opening 20b and thus on the physical properties and the quality of the granules, or as long as simple control is possible, the rotating speed of the driving screw 22A may be controlled on the assumption that the aforementioned extrusion molding control is performed.

The powdery raw material that is used in the method for controlling the extruder 6 of the embodiment and the method for producing a flavor source using the same, and the extruder 6 and the extrusion molding system 1 using the same is not limited to a tobacco raw material; and the granules that are formed by the extruder 6 and thus the extrusion molding system 1 are not limited to those used as a flavor source of a non-combustion-type flavor inhaler.

### Reference Signs List

- 1: extrusion molding system
- 2: hopper
- 4: cycle feeder (predetermined quantity feeder)
- 6: extruder
- 10: table
- 12: blade
- 14: rotating shaft
- 20: casing
- 20b: extrusion opening
- 22: screw
- 22A: driving screw
- 22B: interlocking screw
- 26: driving source
- 28: load cell (load measuring device)
- 30: control unit

## Claims

1. A method for controlling an extruder for kneading and extruding a powdery raw material fed into a casing by rotating a screw to form a kneaded product that is a source of granules, the method for controlling the extruder comprising:
a load measurement step that measures a thrust load of the screw that is rotating; and
a feed control step that controls a feed of the raw material into the casing based on the thrust load measured in the load measurement step.

2. The method for controlling the extruder according to Claim 1, wherein, in the feed control step, based on a reference range that defines an upper limit value and a lower limit value of the thrust load measured in the load measurement step, when the thrust load is greater than the upper limit value, the feed of the raw material is reduced, and when the thrust load is less than the lower limit value, the feed of the raw material is increased.

3. The method for controlling the extruder according to Claim 2, comprising:
a reference setting step that, before the feed control step and after the raw material inserted by batch processing has been filled into the casing, measures the thrust load of the screw when the raw material in the casing is kneaded and extruded by rotating the screw, and sets the reference range based on the thrust load that has been measured.

4. The method for controlling the extruder according to Claim 3, wherein the extruder includes, as the screw, a driving screw that is rotated by a driving source and an interlocking screw that is rotated in response to rotation of the driving screw, and
wherein, in the load measurement step and the reference setting step, a thrust load of the interlocking screw is measured.

5. The method for controlling the extruder according to Claim 4, wherein, in the extruder, an extrusion opening for the kneaded product in the casing is positioned on one end side with respect to the driving screw and the interlocking screw in an axial direction thereof, and
wherein, in the load measurement step and the reference setting step, the thrust load of the interlocking screw is measured on another end side in the axial direction.

6. A method for producing a flavor source, wherein the method for producing the flavor source forms the granules as the flavor source for a flavor inhaler from the raw material by using the method for controlling the extruder according to any one of Claims 1 to 5.

7. The method for producing the flavor source according to Claim 6, wherein the flavor source includes a tobacco raw material.

8. An extruder that is used in an extrusion molding system, the extrusion molding system comprising:
a hopper into which a powdery raw material is to be inserted; and
a predetermined quantity feeder that includes a table to which the raw material stored in the hopper is to be fed as a result of the raw material falling onto the table due to a weight of the raw material, a blade that rotates at the table, and a rotating shaft that rotates the blade, the predetermined quantity feeder feeding the raw material of a feed that is in accordance with a rotating speed of the rotating shaft,
wherein the extruder comprises
a casing to which the raw material is to be fed from the predetermined quantity feeder,
a screw that is accommodated in the casing and that rotates to knead and extrude the raw material fed into the casing to thereby form a kneaded product that is a source of granules,
a load measuring device that measures a thrust load of the screw that is rotating, and
a control unit that controls the feed of the raw material into the casing by controlling the rotating speed based on the thrust load measured by the load measuring device.

9. The extruder according to Claim 8, wherein the control unit sets a reference range that defines an upper limit value and a lower limit value of the thrust load measured by the load measuring device, reduces the rotating speed of the rotating shaft when the thrust load is greater than the upper limit value to thereby reduce the feed of the raw material into the casing, and increases the rotating speed of the rotating shaft when the thrust load is less than the lower limit value to thereby increase the feed of the raw material into the casing.

10. The extruder according to Claim 9, wherein, after the raw material inserted into the hopper has been filled into the casing via the predetermined quantity feeder, when a powder bottom pressure of the raw material stored in the hopper is in a stable region, the thrust load of the screw when the raw material in the casing is kneaded and extruded by rotating the screw is measured, and the reference range is set based on the thrust load that has been measured.

11. The extruder according to Claim 10, wherein the extruder includes, as the screw, a driving screw that is rotated by a driving source and an interlocking screw that is rotated in response to rotation of the driving screw, and
wherein the load measuring device measures a thrust load of the interlocking screw.

12. The extruder according to Claim 11, wherein, in the extruder, an extrusion opening for the kneaded product in the casing is positioned on one end side with respect to the driving screw and the interlocking screw in an axial direction thereof, and
wherein the load measuring device is disposed on another end side in the axial direction.

13. An extrusion molding system comprising:
a hopper into which a powdery raw material is to be inserted;
a predetermined quantity feeder that includes a table to which the raw material stored in the hopper is to be fed as a result of the raw material falling onto the table due to a weight of the raw material, a blade that rotates at the table, and a rotating shaft that rotates the blade, the predetermined quantity feeder feeding the raw material of a feed that is in accordance with a rotating speed of the rotating shaft; and
the extruder according to any one of Claims 8 to 12.
